# EUROPEAN PATENT APPLICATION

(11) **EP 4 691 863 A1**
(43) Date of publication of application: **11.02.2026**
(21) Application number: 24193309.2
(22) Date of filing: 07.08.2024
(51) Int. Cl.: B60T 8/32, B60T 8/172, B60W 30/02, B60W 30/18, B60W 40/068, B60T 8/17

(54) **DETERMINING A LONGITUDINAL SLIP LIMIT OF A VEHICLE**

(71) Applicant: Volvo Truck Corporation, 405 08 Göteborg (SE)
(72) Inventor: Groth, Björn, 417 29 Göteborg (SE); Strängberg, Martin, 417 66 Göteborg (SE); Hjelte Ulmehag, Robert, 418 76 Göteborg (SE); Sidhant, Ray, 431 47 Mölndal (SE)
(74) Representative: Valea AB

(57) **Abstract**

A computer system (600) comprising processing circuitry (602) configured to handle wheel slip of at least one wheel (2) of a vehicle (1) is provided. The processing circuitry (602) is further configured to obtain road properties for one or more road segments (10) of a road (100) travelled or to be travelled by the vehicle (1).The road properties are indicative of a curvature of the one or more road segments (10). For each of the one or more road segments (10), determine a longitudinal slip limit (5) based on the road properties for the respective road segment. The longitudinal slip limit (5) indicates a maximum allowed longitudinal slip for the at least one wheel (2) in the respective road segment.

## Description

### TECHNICAL FIELD

The disclosure relates generally to vehicle motion management. In particular aspects, the disclosure relates to determining a longitudinal slip limit of a vehicle. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

As a vehicle travels on different types of roads with different shapes, the vehicle is subject to different lateral forces. When subject to high lateral forces and while also have high slippage on its wheels, instability of the vehicle may occur and the vehicle may need to activate stability control systems such as Anti-Lock Braking (ABS) and/or may need to use service brakes to slow down to stabilize the vehicle. As a result, regenerative braking of electrical motors may not always be possible to use as stability of the vehicle needs to be prioritized.

Hence, there is a need to improve handling of stability of the vehicle to allow for maintaining stability and to improve utilization of regenerative braking.

### SUMMARY

According to a first aspect of the disclosure, a computer system comprising processing circuitry configured to handle wheel slip of at least one wheel of a vehicle is provided.

The processing circuitry is configured to obtain road properties for one or more road segments of a road travelled or to be travelled by the vehicle. The road properties are indicative of a curvature of the one or more road segments.

The processing circuitry is configured to, for each of the one or more road segments, determine a longitudinal slip limit based on the road properties for the respective road segment.

The longitudinal slip limit indicates a maximum allowed longitudinal slip for the at least one wheel in the respective road segment.

In other words, the longitudinal slip limit may be determined with respect to the curvature indicated by the road properties such that the risk of instability of the vehicle is mitigated or avoided when travelling in the respective road segment. Preferably, the longitudinal slip limit is determined solely by the curvature indicated by the road properties, or at least by the curvature as a dominant factor. Using the curvature allows for an efficient determination of the longitudinal slip limit such that stability can be ensured by the limited maximum allowed longitudinal slip, and further allow for using regenerative braking within the margin of the maximum allowed longitudinal slip. While the longitudinal slip limit in examples herein is preferably for each road segment determined based on the road curvature, a dynamic adjustment of the longitudinal slip limit is also possible or used as a complement to improve accuracy of determining the longitudinal slip limit where vehicle motion, vehicle characteristics and/or environment parameters may further be accounted for as discussed below.

For example, the longitudinal slip limit may be determined further based on a predicted or measured motion of the vehicle such as a predicted or measured speed of the vehicle, speed limit of the respective road segment, expected lateral motion applied to the vehicle in the respective road segment, and/or based on a measured or estimated lateral slip of the vehicle.

The longitudinal slip limit may further be determined to account for vehicle characteristics such as size and/or mass.

The longitudinal slip limit may further be determined to account for environmental conditions or any other suitable parameters which may affect stability of the vehicle with respect to slippage of the at least one wheel.

The first aspect of the disclosure may seek to improve stability of the vehicle while allowing for improved utilization of regenerative braking.

A technical benefit may include improved stability of the vehicle and improved utilization of regenerative braking. This is since when the longitudinal slip of the at least one wheel is limited based on the road properties indicative of the road curvature, the vehicle will be able to adjust the longitudinal slip of the at least one wheel such that the vehicle will maintain stability with respect to the curvature of the respective road segment. As an additional benefit, since the vehicle will remain stable during travel in said road segment, regenerative braking may be allowed to be used to a larger extent as long as the longitudinal slip limit is met, thereby improving utilization of regenerative braking while maintaining stability of the vehicle.

Optionally in some examples, including in at least one preferred example, the processing circuitry is further configured to: when detecting that the vehicle is traveling in a respective road segment out of the one or more road segments, control a wheel slip of the at least one wheel to be below the maximum allowed longitudinal slip for the respective road segment.

A technical benefit may include improved vehicle stability and improved utilization of regenerative braking. This is since when the wheel slip is controlled to be below the maximum allowed longitudinal slip, the vehicle can be stable when travelling the curvature of the respective road segment. Furthermore, the regenerative braking may be used to any extent as long as the longitudinal slip limit is met, thereby improving utilization of regenerative braking while maintaining stability of the vehicle.

Optionally in some examples, including in at least one preferred example, the processing circuitry is further configured to control the wheel slip of the at least one wheel to be below the maximum allowed longitudinal slip for the respective road segment by adjusting a torque of the at least one wheel to meet the maximum allowed longitudinal slip.

Controlling the wheel slip of the at least one wheel to be below the maximum allowed longitudinal slip for the respective road segment by adjusting the torque of the at least one wheel to meet the maximum allowed longitudinal slip may comprise issuing torque adjusting information to the vehicle, indicative of that the vehicle shall adjust the torque of the at least one wheel to meet the maximum allowed longitudinal slip.

A technical benefit may include improved vehicle stability and improved utilization of regenerative braking and further allowing for improved utilization of regenerative braking. This is since the torque is adapted such that the longitudinal slip limit is not exceeded, thereby allowing for stability and margin to utilize regenerative braking. Preferably, a speed and/or longitudinal slip may be measured by sensors of the vehicle, and the processing circuitry may thereby obtain the longitudinal slip and/or speed by receiving sensor data from said sensors, and then the processing circuitry may be configured to control the torque with respect to the speed and/or longitudinal slip to control the wheel slip of the at least one wheel to be below the maximum allowed longitudinal slip, i.e., to not exceed the longitudinal slip limit.

Optionally in some examples, including in at least one preferred example, the processing circuitry is further configured to: when detecting that the vehicle is traveling in a respective road segment out of the one or more road segments or prior to entering said respective road segment, control a regenerative brake of the at least one wheel based on the maximum allowed longitudinal slip for the respective road segment.

A technical benefit may include improved stability of the vehicle and improved utilization of regenerative braking. This is since the regenerative brake may be controlled to regeneratively brake to generate power to charge a battery of the vehicle while adhering to the longitudinal slip limit, thereby ensuring that the longitudinal slip of the vehicle is not causing instability of the vehicle.

Optionally in some examples, including in at least one preferred example, the processing circuitry is further configured to determine the longitudinal slip limit based on the road properties of the respective road segment by using predefined heuristics or by mapping the road properties to the longitudinal slip limit.

A technical benefit may include improved stability of the vehicle and improved utilization of regenerative braking. This is since the longitudinal slip limit may be efficiently set by mapping or heuristics, e.g., such as by mapping a set curvature angle to a set longitudinal slip limit. This allows an efficient manner of determining the longitudinal slip limit and may improve stability while allowing for the use of more regenerative braking with respect to the longitudinal slip limit.

Optionally in some examples, including in at least one preferred example, the processing circuitry is further configured to determine an expected lateral motion of the at least one wheel when the vehicle is travelling in the one or more road segments, and to determine the longitudinal slip limit based on the expected lateral motion.

A technical benefit may include improved vehicle stability and improved utilization of regenerative braking and as a consequence further allowing for improved utilization of regenerative braking. This is since when determining the expected lateral motion, the longitudinal slip limit can be more accurately determined for maintaining stability of the vehicle.

Optionally in some examples, including in at least one preferred example, the processing circuitry is further configured to determine the expected lateral motion by obtaining a motion of the vehicle, and to determine the expected lateral motion based on the road properties and a kinematic model and considering the motion of the vehicle.

A technical benefit may include improved vehicle stability and improved utilization of regenerative braking and as a consequence further allowing for improved utilization of regenerative braking. This is since the expected lateral force can be more accurately determined based on the road properties and the kinematic model. Using the kinematic model, it may further be possible to dynamically determine the expected lateral force, which may enable to more accurately determine the longitudinal slip limit in a dynamic manner as the vehicle is travelling towards the respective road segment.

Optionally in some examples, including in at least one preferred example, the road properties comprise friction of the one or more road segments. In these examples, the processing circuitry is further configured to determine the longitudinal slip limit based on the respective friction for the one or more road segments.

A technical benefit may include improved vehicle stability and improved utilization of regenerative braking and as a consequence further allowing for improved utilization of regenerative braking. This is since the longitudinal slip limit may be more accurately determined with respect to the friction of the road segment, both since the longitudinal slip is dependent on the friction, but also since any lateral forces limiting the allowed longitudinal slip may be dependent on the friction.

Optionally in some examples, including in at least one preferred example, the processing circuitry is further configured to determine the longitudinal slip limit prior to entering each respective road segment.

A technical benefit may include improved vehicle stability and improved utilization of regenerative braking and as a consequence further allowing for improved utilization of regenerative braking. This is since it may be possible to adjust the slip of the at least one wheel before entering each respective road segment, thereby ensuring stability and enabling usage of regenerative braking in the respective road segment.

Optionally in some examples, including in at least one preferred example, the road properties of the one or more road segments are at least partly predefined.

A technical benefit may include improved vehicle stability and improved utilization of regenerative braking and as a consequence further allowing for improved utilization of regenerative braking. This is since when the road properties are predefined, e.g., such as in a map and obtained by obtaining map information of the road, the longitudinal slip limit may be determined in advance for a respective road segment, and therefore it may be possible to adjust the slip of the at least one wheel before entering the respective road segment, thereby ensuring stability and enabling usage of regenerative braking in the respective road segment.

Optionally in some examples, including in at least one preferred example, the processing circuitry is further configured to obtain at least part of the road properties by measuring the road properties for a respective road segment using sensors of the vehicle, prior to entering the respective road segment.

A technical benefit may include improved vehicle stability and improved utilization of regenerative braking and as a consequence further allowing for improved utilization of regenerative braking. This is since it may further be possible to dynamically determine the road properties by using the sensors. The measurement may be used for road properties not being predefined and/or may be used to ensure accuracy of, or to adjust predefined road properties. As a consequence, the longitudinal slip limit may be more accurately determined.

According to a second aspect of the disclosure, a vehicle comprising and/or controlled by the computer system according to the first aspect is provided.

Technical benefits of the second aspects correspond to the technical benefits of the first aspect.

According to a third aspect of the disclosure, a computer-implemented method for handling wheel slip of at least one wheel of a vehicle is provided.

The method comprises, by a processing circuitry of a computer system, obtaining road properties for one or more road segments of a road travelled or to be travelled by the vehicle. The road properties are indicative of a curvature of the one or more road segments.

The method comprises, by the processing circuitry, for each of the one or more road segments, determining a longitudinal slip limit based on the road properties for the respective road segment. The longitudinal slip limit indicates a maximum allowed longitudinal slip for the at least one wheel in the respective road segment.

Technical benefits of the third aspect correspond to technical benefits of the first aspect.

Optionally in some examples, including in at least one preferred example, the method comprises, when detecting that the vehicle is traveling in a respective road segment out of the one or more road segments, controlling a wheel slip of the at least one wheel to be below the maximum allowed longitudinal slip for the respective road segment.

Optionally in some examples, including in at least one preferred example, controlling the wheel slip of the at least one wheel to be below the maximum allowed longitudinal slip for the respective road segment comprises adjusting a torque of the at least one wheel to meet the maximum allowed longitudinal slip.

Optionally in some examples, including in at least one preferred example, the method comprises, when detecting that the vehicle is traveling in a respective road segment out of the one or more road segments or prior to entering said respective road segment, based on the maximum allowed longitudinal slip for the respective road segment, controlling a regenerative brake of the at least one wheel.

Optionally in some examples, including in at least one preferred example, determining the longitudinal slip limit is based on the road properties of the respective road segment by using predefined heuristics or by mapping the road properties to the longitudinal slip limit.

Optionally in some examples, including in at least one preferred example, the method comprises determining an expected lateral motion of the at least one wheel when the vehicle is travelling in the one or more road segments, and wherein determining the longitudinal slip limit is based on the expected lateral motion.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, control units, code modules, computer-implemented methods, computer readable media, and computer program products associated with the above discussed technical benefits.

### BRIEF DESCRIPTION OF THE DRAWINGS

Examples are described in more detail below with reference to the appended drawings.
**FIG. 1** is an exemplary vehicle according to an example.
**FIG. 2** is a flow chart of an exemplary method according to an example.
**FIG. 3** illustrates an example scenario.
**FIG. 4** is another view of **FIG. 1****,** according to an example.
**FIG. 5** is a flow chart of an exemplary method according to an example.
**FIG. 6** is a schematic diagram of an exemplary computer system for implementing examples disclosed herein, according to an example.

### DETAILED DESCRIPTION

The detailed description set forth below provides information and examples of the disclosed technology with sufficient detail to enable those skilled in the art to practice the disclosure.

When a driver of a vehicle wants to reduce speed, regenerative braking from electric motors can be used to slow down the vehicle whilst charging a battery. In a straight road, when not much lateral input is needed, higher regeneration for braking the vehicle might be preferred due to larger regeneration of energy which means more longitudinal wheel slip, however, such slip may typically be acceptable when there is little curvature on the road. If the same slip is used in curves associated with a sufficiently high angle, stability hazards may occur due to the combined nature of slip in lateral and longitudinal direction. Hence, longitudinal slip needs to be managed. Normally for these situations, service brakes or other stability systems may be relied upon in these situations which reduces energy regeneration but is an efficient way to ensure stability. However, as part of developing the present disclosure, it has been identified that if slip can be managed, regenerative brakes can still be used. Therefore, in examples herein, a longitudinal slip limit is determined based on road properties indicative of curvatures of road segments. This means that regenerative brakes can be used in these segments and maintain stability as long as the slip is below the determined longitudinal slip limit.

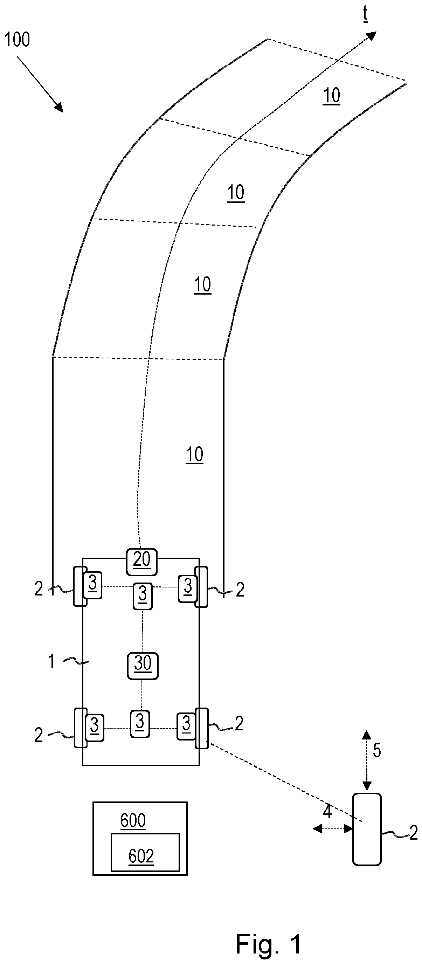

**FIG. 1** is an exemplary **vehicle 1** according to an example. The vehicle 1 may be any suitable vehicle, e.g., a bus, a car, a truck, a vehicle combination, a heavy-duty vehicle, etc.

The vehicle 1 may comprise **at least one wheel 2**. The at least one wheel 2 of examples herein may typically refer to a particular wheel, wheels of one or more specific axles of the vehicle 1, or all wheels of the vehicle 1. The at least one wheel 2 may comprise all driven wheels of the vehicle 1.

The vehicle 1 may comprise **at least one regenerative brake 3** arranged for retarding the vehicle by braking the at least one wheel 2. The at least one regenerative brake 3 may be part of at least one electrical motor used to operate the at least one wheel 2, e.g., per wheel or for a driveline of the vehicle 1. The at least one regenerative brake 3 may be used to charge a **battery 30** comprised in the vehicle 1 when braking the at least one wheel 2. When braking using the at least one regenerative brake 3, longitudinal slip of the at least one wheel 2 may increase or vary more than when braking using service brakes and hence, to maintain stability of the vehicle 1, the slippage may need to be controlled.

The vehicle 1 may be arranged to travel a **road 100**. The road 100 comprises **one or more road segments 10.** Each respective road segment of the one or more road segments 10 may be associated with road properties indicative of a respective curvature. The road properties may further be indicative of other properties of the respective road segment, e.g., friction, surface type, speed limits, etc. In examples herein, a **longitudinal slip limit 5** of the at least one wheel 2 is determined for each of the respective one or more road segments 10 based on their respective road properties. This means that the at least one wheel 2 can in advance be limited to have a maximum longitudinal slip depending on the road curvature indicated by the road properties and hence, stability can be ensured for the vehicle 1 and thereby it is possible to control the at least one wheel 2 and/or the at least one regenerative brake 3 to adapt torque and/or regenerative braking to meet the longitudinal slip limit 5 and thereby optimize usage of regenerative braking when possible and also ensure that the vehicle 1 is stable throughout the curvature of the respective road segment.

The longitudinal slip limit 5 may in some examples be determined based on an **expected lateral motion 4** of the at least one wheel 2, e.g., lateral slip. The expected lateral motion 4 may be determined dynamically based on estimating how the vehicle may travel through a respective road segment 10, e.g., by use of a kinematic model of the vehicle 1 and/or may be determined by using heuristics with respect to the curvature of the road segment 10 or by mapping an angle of the curvature of the road segment 10 to the expected lateral motion based on a predefined mapping.

In some examples, only the road properties are used to determine the longitudinal slip limit 5.

The vehicle 1 may be arranged to travel the road 1, e.g., by a trajectory t, such as passing through multiple of the one or more road segments 10. The longitudinal slip limit 5 may be determined prior to entering each respective road segment 10.

To determine the longitudinal slip limit 5, the road properties may be obtained in advance, e.g., as part of map data and/or as part of sensor data obtained using one or more sensors 20 of the vehicle 1. The one or more sensors 20 may comprise any suitable sensors for measuring the road properties of the one or more road segments, e.g., one or more cameras and/or one or more position sensors for obtaining road properties with reference to map information of the road 100.

Examples herein may be performed by a **computer system 600** and/or a **processing circuitry 602** therein. In other words, the computer system 600 and/or the processing circuitry 602 therein may be arranged to control the vehicle 1 and/or any suitable entities of the vehicle 1 such as the at least one wheel 2, regenerative brakes 3, the one or more sensors 20, or a combination thereof.

The computer system 600 and/or the processing circuitry 602 therein may be comprised in the vehicle 1 but may also be remote to the vehicle 1 and arranged to remotely control the vehicle 1.

The computer system 600 and/or the processing circuitry 602 therein may be, or may comprise an Electronic Control Unit (ECU) of the vehicle 1.

Examples herein may relate to using upcoming and current road geometry of the road 100, i.e., road properties of the one or more road segments 10 such as curvature to adapt the longitudinal slip limit 5 of the at least one wheel 2 accordingly for the respective road segment 10. The longitudinal slip limit 5 may be adapted to have a smooth transition between different road segments such that comfort, stability, and efficient regenerative braking can be ensured.

In particular, two different approaches may be considered for examples herein, which may be combined in any suitable manner.

Approach 1. By intuition, longitudinal slip margins in curvatures of the one or more road segments 100 changes due to the lateral forces that are acting on the vehicle 1 as the vehicle travels each respective road segment. Based on this knowledge, the longitudinal slip limit 5 may be determined to preset values throughout the curve, e.g., depending on an angle or shape of the curvature.

With this approach the amount of regenerative braking can be improved while stability is maintained.

Approach 2. To achieve a more robust and accurate solution, it may be possible to dynamically model the forces acting on the vehicle so that the optimal slip can be predicted and calculated for the upcoming road geometry. In this way, it may be possible to improve utilization of regenerative braking whilst further improving stability. Typically this may be performed by determining the expected lateral motion 4 of the at least one wheel 2 and using this information for determining the longitudinal slip limit 5.

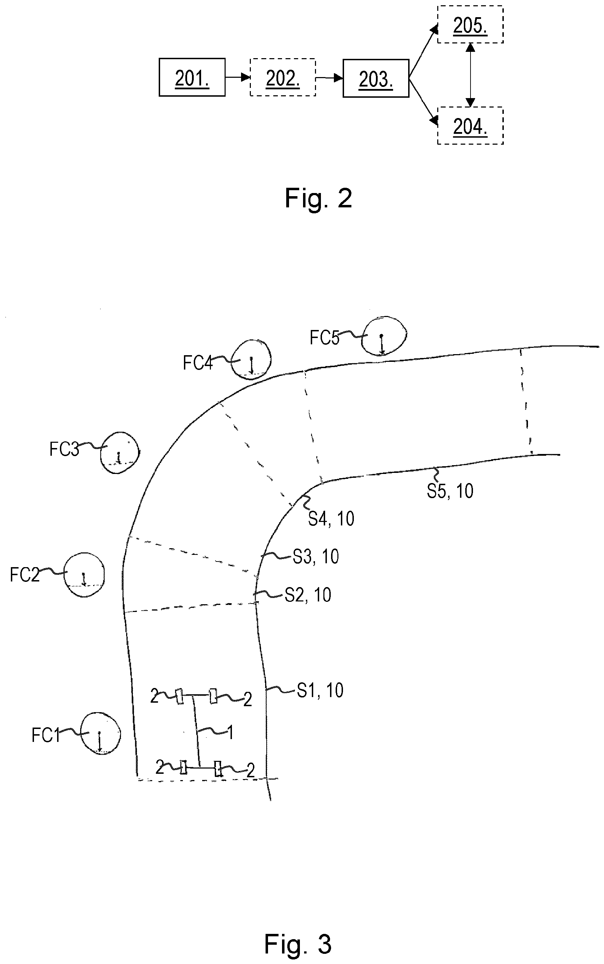

**FIG. 2** is a flow chart of an exemplary computer-implemented method for handling wheel slip of the at least one wheel 2 of the vehicle 1. The method may comprise the following actions in any suitable order. Optional actions may be indicated in FIG. 2 by dashed boxes. The computer system 600 and/or the processing circuitry 602 therein may be configured to perform the method comprising any of the following actions.

The method may in particular relate to determining the longitudinal slip limit 5 for the one or more road segments 5.

### Action 201

The method comprises obtaining road properties for the one or more road segments 10 of the road 100 travelled or to be travelled by the vehicle 1. In other words, the road properties, and the method of examples herein, may be partly or fully performed before the vehicle 1 travels the road 100 or during travelling of the road 100.

The road properties may be represented as any suitable information to be used by examples herein.

The road properties are indicative of a curvature of the one or more road segments 10.

In some examples, the road properties comprise friction of the one or more road segments 10.

In some examples, the road properties comprise any other suitable metrics or parameters of the respective one or more road segments 10 that may be used to determine the longitudinal slip limit 5.

In some examples, the road properties of the one or more road segments 10 are at least partly predefined, e.g., obtained from a storage medium. For example, they may be defined as part of map information of a map of the road 100.

In some examples, at least part of the road properties is obtained by measuring the road properties for a respective road segment by using sensors of the vehicle 1 and obtaining sensor data from said sensors, prior to entering the respective road segment.

In other words, the road properties indicating the curvature of the one or more road segments 10 may be predefined and/or dynamically measured as the vehicle 1 approaches the respective road segment 10.

### Action 202

In some examples, the method comprises determining an expected lateral motion 4 of the at least one wheel 2 when the vehicle 1 is travelling in the one or more road segments 10. The expected lateral motion may preferably be determined prior to the vehicle 1 entering the respective road segment 10.

The expected lateral motion 4 may preferably be a lateral slip of the at least one wheel 2 but may also indicate any other lateral forces which may move the at least one wheel 2 laterally.

The expected lateral motion 4 may further be used to dynamically and/or more accurately determine or adjust the longitudinal slip limit 5 as will be discussed below.

Determining the expected lateral motion 4 may be performed by obtaining a motion of the vehicle 1, e.g., by using sensor data from the one or more sensors 20, and determining the expected lateral motion 4 based on the road properties and a kinematic model, considering the motion of the vehicle 1. For example, the kinematic model may indicate the lateral motion of vehicle 1 in the one or more road segments 10 based on the current motion and the road properties of the one or more road segments 10.

### Action 203

The method comprises determining the longitudinal slip limit 5 based on the road properties for the respective road segment of the one or more road segments 10.

The longitudinal slip limit 5 indicates a maximum allowed longitudinal slip for the at least one wheel 2 in the respective road segment 10.

In other words, the longitudinal slip limit 5 may be determined solely or partly based on the road curvature indicated by the road properties. The longitudinal slip limit 5 can therefore be determined in advance and does not need to be determined in a reactive manner as the vehicle is subject to lateral forces in the respective road segment 10.

The longitudinal slip limit 5 may be determined for the at least one wheel 2 which may be one single particular wheel or for multiple or all wheels of the vehicle 1. In the case of the at least one wheel 2 being a single wheel, the method may be performed for multiple wheels, e.g., all driven wheels, of the vehicle in a corresponding manner.

In some examples, determining the longitudinal slip limit 5 is based on the road properties of the respective road segment by using predefined heuristics or by mapping the road properties to the longitudinal slip limit 5. For example, the curvature of the road properties may, based on heuristics, determine the longitudinal slip limit 5, e.g., where certain types of curvatures may be associated with certain slip limits. For example, if the curvature indicates that the respective road segment curve is turning by an angle within a set angle range or that a shape of the curvature has a set pattern, the longitudinal slip limit 5 may be determined to be a predefined slip, or may be calculated according to a predefined equation.

Alternatively, the road properties such as parameters of the road curvature e.g., angle or turning radius of the respective road segment 10, may be mapped by a predefined mapping to the respective longitudinal slip limit 5. In other words, the longitudinal slip limit 5 may be predefined for certain types of road properties, and determining the longitudinal slip limit 5 may comprise obtaining the respective slip limit using the respective road properties.

In some examples, determining the longitudinal slip limit 5 is based on the expected lateral motion 4, e.g., as determined in action 202. Typically the expected lateral motion 4 is lateral slip. There may be an inverse correspondence between the expected lateral motion 4 and the longitudinal slip limit 5, i.e., as the expected lateral motion 4 increases, the longitudinal slip limit 5 may be lowered due to risk of instability. As the expected lateral motion 4 is low or zero, the longitudinal slip limit 5 may be set higher, e.g., to a maximum.

Additionally or alternatively, determining the longitudinal slip limit 5 may be based on expected lateral forces acting on the vehicle 1, e.g., determined by prediction or estimation, similar to action 202.

In some examples, determining the longitudinal slip limit 5 may be based on the respective friction for the one or more road segments 10 or may be adjusted based on the respective friction.

In some examples, determining the longitudinal slip limit 5 may be performed prior to entering each respective road segment.

### Action 204

In some examples, the method may comprise, when detecting that the vehicle 1 is traveling in a respective road segment out of the one or more road segments 10, controlling a wheel slip of the at least one wheel 2 to be below the maximum allowed longitudinal slip for the respective road segment. In other words, the at least one wheel 2 is controlled, e.g., by instructing at least one electrical motor of the at least one wheel 2, to adhere to the longitudinal slip limit 5.

In some examples, controlling the wheel slip of the at least one wheel 2 to be below the maximum allowed longitudinal slip for the respective road segment comprises adjusting a torque of the at least one wheel 2 to meet the maximum allowed longitudinal slip. The torque may be adjusted with respect to a speed of the vehicle 1 to adhere to the longitudinal slip limit 5. The speed of the vehicle 1 may be obtained from the one or more sensors 20.

Controlling the wheel slip of the at least one wheel 2 to be below the maximum allowed longitudinal slip for the respective road segment by adjusting the torque of the at least one wheel 2 to meet the maximum allowed longitudinal slip may comprise issuing torque adjusting information to the vehicle 1, indicative of that the vehicle 1 or the wheel slip controller shall adjust the torque of the at least one wheel 2 to meet the maximum allowed longitudinal slip. The torque adjusting information may indicate the maximum longitudinal slip.

Between each road segment 10, the wheel slip of the at least one wheel 2 may be controlled such that there is a smooth overlap, i.e., that the slip is adjusted to the longitudinal slip limit 5 of the subsequent road segment 10 before entering said road segment 10.

### Action 205

In some examples, the method may comprise, when detecting that the vehicle 1 is traveling in a respective road segment out of the one or more road segments 10 or prior to entering said respective road segment, based on the maximum allowed longitudinal slip for the respective road segment, controlling the regenerative brake 3 of the at least one wheel 2. In other words, the usage of the regenerative brake 3 may be controlled such that there is not more slip in the at least one wheel 2 than what is allowed by the longitudinal wheel slip 5. The regenerative braking may be controlled such that the longitudinal slip limit 5 is adhered to prior to the vehicle 1 entering the respective road segment 10.

Actions 204-205 may be performed separately or concurrently. In other words, controlling the regenerative brake 3 of the at least one wheel 2 may be performed concurrently with controlling the wheel slip of the at least one wheel 2. The detection of action 204 and 205 may be the same detection triggering the different actions.

**FIG. 3** illustrates an example scenario where the one or more road segments 10 are exemplified by **S1-S5** and accompanied by corresponding friction circles **FC1-FC5** indicating respective amount of friction in size of the circle, and wherein the length of the arrows indicates the longitudinal slip limit 5 per road segment 10, S1-S5.

It may be observed that road segments with little or no curvature such as S 1 or S5, may be associated with a high or maximum longitudinal slip limit 5, and when road segments with increased curvature may have correspondingly smaller longitudinal slip limit 5.

Hence, when the vehicle 1 travels in S1, the longitudinal slip limit may be high, e.g., at a predefined max for the one or more road segments 10. When the vehicle travels in S2, and is approaching the sharp curvature of S3, the longitudinal slip limit 5 may be decreased relative to the longitudinal slip limit 5 of S 1 due to higher expected lateral force.

The longitudinal slip limit 5 may further be decreased in S3 compared to as in S2 due to higher expected lateral force.

The longitudinal slip limit 5 may be decreased in advance, prior to entering S2 or S3, since it may not be desirable to enter the respective curvatures with already high longitudinal slip.

In a corresponding manner, when the vehicle 1 is approaching or exiting the curve, e.g., exiting S3 or S4, the respective longitudinal slip limit 5 may be increased. As the vehicle is approaching the exit of the respective curvatures it may be possible to slowly allow more longitudinal slip in an earlier phase.

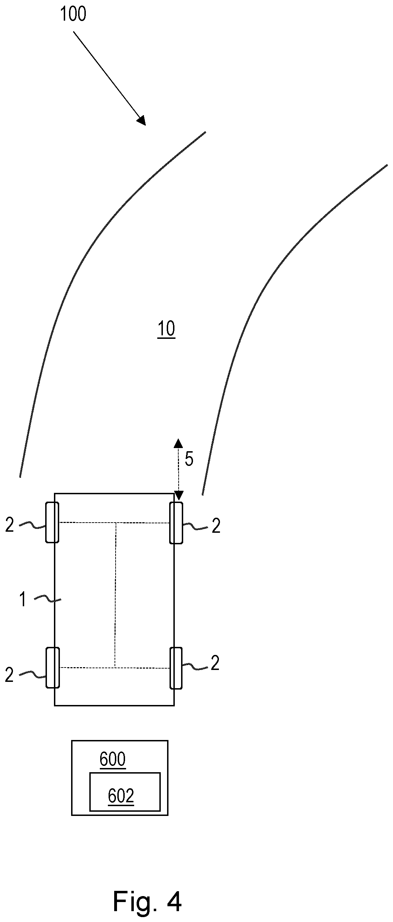

**FIG. 4** is another view of **FIG. 1****,** according to an example. The computer system 600 comprising the processing circuitry 602 is configured to handle wheel slip of the at least one wheel 2 of the vehicle 1.

The processing circuitry 602 is further configured to obtain road properties for the one or more road segments 10 of the road 100 travelled or to be travelled by the vehicle 1. The road properties are indicative of a curvature of the one or more road segments 10.

The processing circuitry 602 is further configured to, for each of the one or more road segments 10, determine the longitudinal slip limit 5 based on the road properties for the respective road segment. The longitudinal slip limit 5 indicates a maximum allowed longitudinal slip for the at least one wheel 2 in the respective road segment.

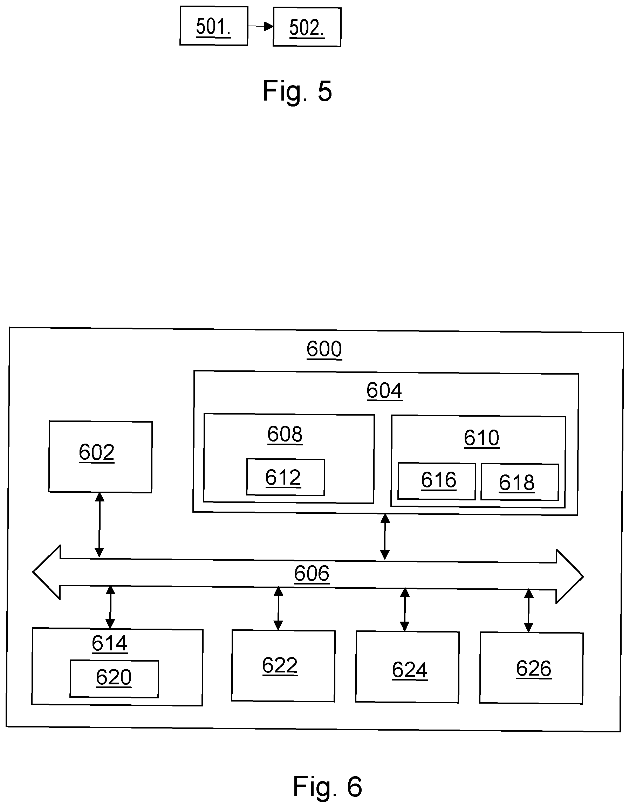

**FIG. 5** is a flow chart of an exemplary computer-implemented method for handling wheel slip of the at least one wheel 2 of the vehicle 1 according to an example. The below actions 501-502 may be combined with any of the above or below examples in any suitable manner.

### Action 501

The method comprises: by the processing circuitry 602 of the computer system 600, obtaining road properties for the one or more road segments 10 of the road 100 travelled or to be travelled by the vehicle 1. The road properties are indicative of a curvature of the one or more road segments 10.

### Action 502

The method comprises: by the processing circuitry 602, for each of the one or more road segments 10, determining the longitudinal slip limit 5 based on the road properties for the respective road segment, the longitudinal slip limit 5 indicates a maximum allowed longitudinal slip for the at least one wheel 2 in the respective road segment.

**FIG. 6** is a schematic diagram of a computer system **600** for implementing examples disclosed herein. The computer system **600** is adapted to execute instructions from a computer-readable medium to perform these and/or any of the functions or processing described herein. The computer system **600** may be connected (e.g., networked) to other machines in a LAN (Local Area Network), LIN (Local Interconnect Network), automotive network communication protocol (e.g., FlexRay), an intranet, an extranet, or the Internet. While only a single device is illustrated, the computer system **600** may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system **600** may comprise at least one computing device or electronic device capable of including firmware, hardware, and/or executing software instructions to implement the functionality described herein. The computer system **600** may include processing circuitry **602** (e.g., processing circuitry including one or more processor devices or control units), a memory **604,** and a system bus **606.** The computer system **600** may include at least one computing device having the processing circuitry **602.** The system bus **606** provides an interface for system components including, but not limited to, the memory **604** and the processing circuitry **602.** The processing circuitry **602** may include any number of hardware components for conducting data or signal processing or for executing computer code stored in memory **604.** The processing circuitry **602** may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry **602** may further include computer executable code that controls operation of the programmable device.

The system bus **606** may be any of several types of bus structures that may further interconnect to a memory bus (with or without a memory controller), a peripheral bus, and/or a local bus using any of a variety of bus architectures. The memory **604** may be one or more devices for storing data and/or computer code for completing or facilitating methods described herein. The memory **604** may include database components, object code components, script components, or other types of information structure for supporting the various activities herein. Any distributed or local memory device may be utilized with the systems and methods of this description. The memory **604** may be communicably connected to the processing circuitry **602** (e.g., via a circuit or any other wired, wireless, or network connection) and may include computer code for executing one or more processes described herein. The memory **604** may include non-volatile memory **608** (e.g., read-only memory (ROM), erasable programmable read-only memory (EPROM), electrically erasable programmable read-only memory (EEPROM), etc.), and volatile memory **610** (e.g., random-access memory (RAM)), or any other medium which can be used to carry or store desired program code in the form of machine-executable instructions or data structures and which can be accessed by a computer or other machine with processing circuitry **602.** A basic input/output system (BIOS) **612** may be stored in the non-volatile memory **608** and can include the basic routines that help to transfer information between elements within the computer system **600.**

The computer system **600** may further include or be coupled to a non-transitory computer-readable storage medium such as the storage device **614,** which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device **614** and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device **614** and/or in the volatile memory **610,** which may include an operating system **616** and/or one or more program modules **618.** All or a portion of the examples disclosed herein may be implemented as a computer program **620** stored on a transitory or non-transitory computer-usable or computer-readable storage medium (e.g., single medium or multiple media), such as the storage device **614,** which includes complex programming instructions (e.g., complex computer-readable program code) to cause the processing circuitry **602** to carry out actions described herein. Thus, the computer-readable program code of the computer program **620** can comprise software instructions for implementing the functionality of the examples described herein when executed by the processing circuitry **602.** In some examples, the storage device **614** may be a computer program product (e.g., readable storage medium) storing the computer program **620** thereon, where at least a portion of a computer program **620** may be loadable (e.g., into a processor) for implementing the functionality of the examples described herein when executed by the processing circuitry **602.** The processing circuitry **602** may serve as a controller or control system for the computer system **600** that is to implement the functionality described herein.

The computer system **600** may include an input device interface **622** configured to receive input and selections to be communicated to the computer system **600** when executing instructions, such as from a keyboard, mouse, touch-sensitive surface, etc. Such input devices may be connected to the processing circuitry **602** through the input device
interface **622** coupled to the system bus **606** but can be connected through other interfaces, such as a parallel port, an Institute of Electrical and Electronic Engineers (IEEE) 1394 serial port, a Universal Serial Bus (USB) port, an IR interface, and the like. The computer system **600** may include an output device interface **624** configured to forward output, such as to a display, a video display unit (e.g., a liquid crystal display (LCD) or a cathode ray tube (CRT)). The computer system **600** may include a communications interface **626** suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

Below follows a list of Examples 1-20 which may be combined in any suitable manner with any of the above-mentioned examples or with the attached claims.
Example 1. A computer system 600 comprising processing circuitry 602 configured to handle wheel slip of at least one wheel 2 of a vehicle 1, the processing circuitry 602 is further configured to:
   - obtain road properties for one or more road segments 10 of a road 100 travelled or to be travelled by the vehicle 1, the road properties being indicative of a curvature of the one or more road segments 10,
   - for each of the one or more road segments 10, determine a longitudinal slip limit 5 based on the road properties for the respective road segment, the longitudinal slip limit 5 indicating a maximum allowed longitudinal slip for the at least one wheel 2 in the respective road segment.
Example 2. The computer system 600 of Example 1, wherein the processing circuitry 602 is further configured to:
   - when detecting that the vehicle 1 is traveling in a respective road segment out of the one or more road segments 10, control a wheel slip of the at least one wheel 2 to be below the maximum allowed longitudinal slip for the respective road segment.
Example 3. The computer system 600 of Example 2, wherein the processing circuitry 602 is further configured to control the wheel slip of the at least one wheel 2 to be below the maximum allowed longitudinal slip for the respective road segment by adjusting a torque of the at least one wheel 2 to meet the maximum allowed longitudinal slip.
Example 4. The computer system 600 of any of Examples 1-3, wherein the processing circuitry 602 is further configured to:
   - when detecting that the vehicle 1 is traveling in a respective road segment out of the one or more road segments 10 or prior to entering said respective road segment, control a regenerative brake of the at least one wheel 2 based on the maximum allowed longitudinal slip for the respective road segment.
Example 5. The computer system 600 of any of Examples 1-4, wherein the processing circuitry 602 is further configured to determine the longitudinal slip limit 5 based on the road properties of the respective road segment by using predefined heuristics or by mapping the road properties to the longitudinal slip limit 5.
Example 6. The computer system 600 of any of Examples 1-5, wherein the processing circuitry 602 is further configured to determine an expected lateral motion 4 of the at least one wheel 2 when the vehicle 1 is travelling in the one or more road segments 10, and to determine the longitudinal slip limit 5 based on the expected lateral motion 4.
Example 7. The computer system 600 of Example 6, wherein the processing circuitry 602 is further configured to determine the expected lateral motion 4 by obtaining a motion of the vehicle 1, and to determine the expected lateral motion 4 based on the road properties and a kinematic model considering the motion of the vehicle 1.
Example 8. The computer system 600 of any of Examples 1-7, wherein the road properties comprises friction of the one or more road segments 10, and wherein the processing circuitry 602 is further configured to determine the longitudinal slip limit 5 based on the respective friction for the one or more road segments 10.
Example 9. The computer system 600 of any of Examples 1-8, wherein the processing circuitry 602 is further configured to determine the longitudinal slip limit 5 prior to entering each respective road segment.
Example 10. The computer system 600 of any of Examples 1-9, wherein the road properties of the one or more road segments 10 are at least partly predefined.
Example 11. The computer system 600 of any of Examples 1-10, wherein the processing circuitry 602 is further configured to obtain at least part of the road properties by measuring the road properties for a respective road segment using sensors of the vehicle 1, prior to entering the respective road segment.
Example 12. A vehicle 1 comprising and/or controlled by the computer system 600 according to any of Examples 1-11.
Example 13. A computer-implemented method for handling wheel slip of at least one wheel 2 of a vehicle 1, the method comprising:
   - by processing circuitry 602 of a computer system 600, obtaining 201, 501 road properties for one or more road segments 10 of a road 100 travelled or to be travelled by the vehicle 1, the road properties being indicative of a curvature of the one or more road segments 10,
   - by the processing circuitry 602, for each of the one or more road segments 10, determining 203, 502 a longitudinal slip limit 5 based on the road properties for the respective road segment, the longitudinal slip limit 5 indicating a maximum allowed longitudinal slip for the at least one wheel 2 in the respective road segment.
Example 14. The method of Example 11, further comprising:
   - by the processing circuitry 602, when detecting that the vehicle 1 is traveling in a respective road segment out of the one or more road segments 10, controlling 204 a wheel slip of the at least one wheel 2 to be below the maximum allowed longitudinal slip for the respective road segment.
Example 15. The method of Example 12, wherein controlling 204 the wheel slip of the at least one wheel 2 to be below the maximum allowed longitudinal slip for the respective road segment comprises adjusting a torque of the at least one wheel 2 to meet the maximum allowed longitudinal slip.
Example 16. The method of any of Examples 11-13, further comprising:
   - when detecting that the vehicle 1 is traveling in a respective road segment out of the one or more road segments 10 or prior to entering said respective road segment, based on the maximum allowed longitudinal slip for the respective road segment, controlling 205 a regenerative brake of the at least one wheel 2.
Example 17. The method of any of Examples 13-16, wherein determining 203 the longitudinal slip limit 5 is based on the road properties of the respective road segment by using predefined heuristics or by mapping the road properties to the longitudinal slip limit 5..
Example 18. The method of any of Examples 13-17, wherein the method further comprises determining 202 an expected lateral motion 4 of the at least one wheel 2 when the vehicle 1 is travelling in the one or more road segments 10, and wherein determining 203 the longitudinal slip limit 5 is based on the expected lateral motion 4.
Example 19. A computer program product comprising program code for performing, when executed by the processing circuitry 602, the method of any of Examples 13-18.
Example 20. A non-transitory computer-readable storage medium comprising instructions, which when executed by the processing circuitry 602, cause the processing circuitry 602 to perform the method of any of Examples 13-18.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A computer system (600) comprising processing circuitry (602) configured to handle wheel slip of at least one wheel (2) of a vehicle (1), the processing circuitry (602) is further configured to:
- obtain road properties for one or more road segments (10) of a road (100) travelled or to be travelled by the vehicle (1), the road properties being indicative of a curvature of the one or more road segments (10),
- for each of the one or more road segments (10), determine a longitudinal slip limit (5) based on the road properties for the respective road segment, the longitudinal slip limit (5) indicating a maximum allowed longitudinal slip for the at least one wheel (2) in the respective road segment.

2. The computer system (600) of claim 1, wherein the processing circuitry (602) is further configured to:
- when detecting that the vehicle (1) is traveling in a respective road segment out of the one or more road segments (10), control a wheel slip of the at least one wheel (2) to be below the maximum allowed longitudinal slip for the respective road segment.

3. The computer system (600) of claim 2, wherein the processing circuitry (602) is further configured to control the wheel slip of the at least one wheel (2) to be below the maximum allowed longitudinal slip for the respective road segment by adjusting a torque of the at least one wheel (2) to meet the maximum allowed longitudinal slip.

4. The computer system (600) of any of claims 1-3, wherein the processing circuitry (602) is further configured to:
- when detecting that the vehicle (1) is traveling in a respective road segment out of the one or more road segments (10) or prior to entering said respective road segment, control a regenerative brake of the at least one wheel (2) based on the maximum allowed longitudinal slip for the respective road segment.

5. The computer system (600) of any of claims 1-4, wherein the processing circuitry (602) is further configured to determine the longitudinal slip limit (5) based on the road properties of the respective road segment by using predefined heuristics or by mapping the road properties to the longitudinal slip limit (5).

6. The computer system (600) of any of claims 1-5, wherein the processing circuitry (602) is further configured to determine an expected lateral motion (4) of the at least one wheel (2) when the vehicle (1) is travelling in the one or more road segments (10), and to determine the longitudinal slip limit (5) based on the expected lateral motion (4).

7. The computer system (600) of claim 6, wherein the processing circuitry (602) is further configured to determine the expected lateral motion (4) by obtaining a motion of the vehicle (1), and to determine the expected lateral motion (4) based on the road properties and a kinematic model considering the motion of the vehicle (1).

8. The computer system (600) of any of claims 1-7, wherein the road properties comprises friction of the one or more road segments (10), and wherein the processing circuitry (602) is further configured to determine the longitudinal slip limit (5) based on the respective friction for the one or more road segments (10).

9. The computer system (600) of any of claims 1-8, wherein the processing circuitry (602) is further configured to determine the longitudinal slip limit (5) prior to entering each respective road segment.

10. The computer system (600) of any of claims 1-9, wherein the road properties of the one or more road segments (10) are at least partly predefined.

11. The computer system (600) of any of claims 1-10, wherein the processing circuitry (602) is further configured to obtain at least part of the road properties by measuring the road properties for a respective road segment using sensors of the vehicle (1), prior to entering the respective road segment.

12. A vehicle (1) comprising and/or controlled by the computer system (600) according to any of claims 1-11.

13. A computer-implemented method for handling wheel slip of at least one wheel (2) of a vehicle (1), the method comprising:
- by processing circuitry (602) of a computer system (600), obtaining (201, 501) road properties for one or more road segments (10) of a road (100) travelled or to be travelled by the vehicle (1), the road properties being indicative of a curvature of the one or more road segments (10),
- by the processing circuitry (602), for each of the one or more road segments (10), determining (203, 502) a longitudinal slip limit (5) based on the road properties for the respective road segment, the longitudinal slip limit (5) indicating a maximum allowed longitudinal slip for the at least one wheel (2) in the respective road segment.

14. A computer program product comprising program code for performing, when executed by the processing circuitry (602), the method of claim 13.

15. A non-transitory computer-readable storage medium comprising instructions, which when executed by the processing circuitry (602), cause the processing circuitry (602) to perform the method of claim 13.
